(19) **Europäisches Patentamt**
**European Patent Office**
**Office européen des brevets**

(11) **EP 2 859 942 A2**

(12) **EUROPEAN PATENT APPLICATION**
published in accordance with Art. 153(4) EPC

(43) Date of publication:
**15.04.2015 Bulletin 2015/16**

(21) Application number: **13750903.0**

(22) Date of filing: **11.06.2013**

(51) Int Cl.:
*B01J 23/10* (2006.01)   *A23L 3/3436* (2006.01)
*B01J 21/16* (2006.01)   *B01J 35/00* (2006.01)
*B01J 35/02* (2006.01)   *B01J 37/02* (2006.01)
*B65D 1/02* (2006.01)   *B82Y 30/00* (2011.01)
*C08K 3/34* (2006.01)

(86) International application number:
**PCT/ES2013/070378**

(87) International publication number:
**WO 2013/186416 (19.12.2013 Gazette 2013/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.06.2012 ES 201230904**

(71) Applicant: **Nanobiomatters Research &
Development, S.L.**
**46980 Paterna (Valencia) (ES)**

(72) Inventors:
- **BUSOLO PONS, Maria Antonieta**
  **E-46980 Paterna - Valencia (ES)**
- **LAGARÓN CABELLO, José María**
  **E-46980 Paterna - Valencia (ES)**

(74) Representative: **ABG Patentes, S.L.**
**Avenida de Burgos, 16D**
**Edificio Euromor**
**28036 Madrid (ES)**

(54) **ACTIVE MATERIALS BASED ON CERIUM WITH A CATALYTIC CAPACITY AND METHOD FOR PRODUCING SAME**

(57) The present invention relates to combinations comprising hydrogen gas or a hydrogen donor agent and nanoclays comprising metallic cerium or cerium oxide particles. The invention also relates to compositions, nanocomposite materials and containers comprising these combinations. Additionally, the present invention relates to methods for obtaining these combinations and to the use thereof in packaging oxygen- and oxidation-sensitive products.

**EP 2 859 942 A2**

**Description**

Field of the Invention

The present invention relates to a combination comprising hydrogen gas or a hydrogen donor agent and a nanoclay comprising a cerium oxide or metallic cerium capable of catalyzing the reaction to produce water from oxygen and hydrogen. The invention also relates to compositions comprising these clays and hydrogen or a hydrogen donor agent and to materials comprising said compositions and a polimeric matrix; as well as to the use and the processes for obtaining these compositions and materials.

The present invention relates to nanocomposite materials containing nanoclays as the support of metallic cerium or cerium oxide particles. These compounds intercalated or supported in the nanoclays act as the catalyst of the reaction to produce water from oxygen and hydrogen, which can directly be in the form of gas or generated by a hydrogen donor agent. The sheets of natural and/or synthetic clays where the inorganic compounds which have catalytic properties are intercalated can optionally contain other organic compounds, metallic compounds, inorganic compounds or combination thereof which may play the role of compatibilizing agents, dispersing agents, functionality increasing agents, or combination thereof.

It is also described the formulation of nanocomposite materials based on incorporating the mentioned nanoclays in a plastic matrix by any plastic manufacturing or processing method, such as solvent evaporation and deposition methods (e.g., coatings and lamination), application of monomeric solution followed by polymerization and curing or crosslinking or vulcanization, operations typically used during thermosetting materials and elastomers formulation, by means of melt mixing processes (e.g., extrusion, injection, blowing) and/or in-situ polymerization methods.

The present invention relates to the use of the active nanocomposite materials based on nanoclays modified with cerium oxide or metallic cerium, and which contain a hydrogen source which can either form part of the nanocomposite or of the packaging system, and which act as active oxygen scavenging materials in applications of packaging oxygen- and oxidation-sensitive products.

Prior State of the Art

One of the main problems in food preservation is oxidation leading to the loss of nutritional properties (caused by vitamin and lipid degradation, protein insolubilization) and organoleptic properties (rancidity, browning, loss of aromas, discoloration, texture and shape changes). Oxidation reactions originate from the direct action of molecular oxygen and its free radicals, can contribute to the development of aerobic microorganisms, which will spoil the food faster and can represent a risk on consumer's health. General food spoilage causes the product to be rejected by the consumer, and thus producer losses. One of the ways to prevent the direct and indirect actions of oxygen on the quality of packaged products is to reduce or eliminate the oxygen content inside the container using an absorber.

A novel option to prevent the action of oxygen in the packaged foods is the incorporation of oxygen scavenging agents in the plastic materials for obtaining active compounds which are subsequently used in manufacturing items for packaging. This option does not involve distorting the packaging material by adding a foreign element to the food (such as the case of sachets) and has no limitations with respect to the type of food (solid or liquid). On the other hand, the market demands stimulate the development of container materials that do not only protect the products and maintain their freshness and quality, but also allow modern designs and allow the consumer to examine the product at a glance. To meet these demands, active materials with a minimum or with no impact on the appearance with respect to pure materials (color, transparency) are needed. The most widely used polymers in food containers due to their properties as a barrier against different permeating elements, resistance, versatility and transparency are polyesters (e.g., polyethylene terephthalate, PET), high and low density polyethylene (HDPE and LDPE, respectively), polypropylene (PP), ethylene copolymers (e.g., vinyl acetate, EVA; ethylene vinyl alcohol, EVOH), polyamides, polystyrenes and PVC, among others. Other PET-based systems include the mixture with aromatic polyamides, compatibilizing agents and cobalt catalyst (for example the one described in US2010209641). Other oxygen scavenging systems include a base polymer (mainly PET), a non-polymerizable organic compound susceptible to oxidation, and a transition metal salt, more specifically cobalt, between 10-100 ppm (for example the one described in patent US 7,691,290). Other active systems are those PET compounds for bottle manufacture, the functionality of which is based on the reaction between hydrogen and oxygen to produce water, and which consist of incorporating a redox catalyst (typically a palladium salt) into the body of the bottle and a hydrogen generator (typically an inorganic hydride such as sodium borohydride, NaBH4) incorporated in the closure (US2010/0028499).

In turn, NaBH4 has been used as clay bleaching agent (patents US 3,290,161 and US 3,937,632), but until now the incorporation of inorganic hydrides or other hydrogen sources in clays using chemical or physical methods has not been protected or described.

Oxygen-deficient cerium oxide, alone or combined with other inorganic oxides, has also been applied in oxygen elimination. Patents US 2009/0126573 and US 2011/0086757 explain the reaction of porous cerium oxide having a variable surface area with oxygen and the incorporation thereof in different polimeric matrices for manufacturing active food containers of different single-layered or multilayered structures.

The modification of clays with organic molecules with oxygen absorbing capacity and with organic modifiers as compatibilizing agents, and the use thereof in the preparation of active materials for food containers of different configurations is detailed in patent US 6,610,772. Additionally, this patent lists the use of transition metals as the catalysts of oxygen scavenging reaction.

Cerium oxide, $CeO_2$ or ceria, is a material that has been shown to be versatile due to its countless applications in catalysis, such as a conductor in fuel cells, as high precision polishing material, and more recently, in biomedicine. Ceria is a non-stoichiometric compound where the cerium atom can co-exist in the oxidation states (III) and (IV). This duality causes the existence of oxygen vacant sites in the crystalline structure which are responsible for the redox capacity of nanoceria that is particularly useful in catalysis. In catalytic applications, the catalyst activity depends on the particle size, so the ceria nanoparticles show high activity with respect to larger particles. There are different methods for synthesizing nanoceria, such as precipitation in solution, sol-gel methods, combined hydrothermal-microwave processes, electrochemical synthesis, sonochemistry, gas-liquid co-precipitation and alkaline fusion.

Patent application PCT/ES2012/070391 describes the modification of clays with metallic cerium using different reducing agents, and the performance thereof as oxygen scavenging agent. Once incorporated into polimeric matrices, these clays give rise to active nanocomposites with oxygen scavenging properties. In this case, the activity of the material lies in the oxidation of metallic cerium supported in the nanoclay. However, until now the applicant is unaware of any report or patent concerning the use of clays modified with cerium oxide or metallic cerium as a catalyst of redox processes, specifically of the combination of oxygen with hydrogen to produce water. The physical mixture of metallic hydrides or other chemical hydrogen generating agents with clays or porous solids as a method for preparing a hydrogen generating system has not been reported or protected either. Hence, the incorporation of nanoclays containing cerium oxide or metallic cerium and the physical mixture of nanoclays with hydrogen generating agents in polimeric matrices for producing plastic materials with oxygen scavenging capacity has neither been reported nor patented.

Description of the Invention

The present invention relates to the manufacturing of active oxygen scavenging materials using polimeric nanocomposites containing nanoclays modified with cerium oxide or metallic cerium, and a hydrogen source. The hydrogen required for this reaction can come from organic or inorganic precursors physically mixed with nanoclays and incorporated in the nanocomposite, or from the hydrolysis reactions of organic or inorganic compounds catalyzed by enzymes or bacteria, or from the hydrolysis of alloys, or from the prior modification of the system atmosphere, among other sources. The oxygen required for this reaction is provided naturally by the system; because it is in the atmosphere contacting the material or because it is taken in from the outside in the case of a container, or because it is part of the atmosphere of the packaged product (headspace).

The present invention describes the incorporation of cerium oxide or metallic cerium in nanoclays (layered phyllosilicates). Cerium oxide or metallic cerium contained in the clay acts as the catalyst of the process of producing water from oxygen and hydrogen. The catalytic performance of cerium oxide or of metallic cerium can be enhanced if it is supported in substrates with large surface areas, such as clays. Given that catalysis reactions occur on the ceria or metal surface, a larger available surface obtained from reducing the particle size by means of a homogenous and effective dispersion in the support would increase catalytic efficiency. The modified nanoclays have the necessary heat stability and compatibility for being incorporated in polimeric matrices under different processing conditions and thus producing the corresponding nanocomposite materials. These nanocomposite materials applied to food containers have a higher oxygen absorbing capacity, and therefore a greater protection for the food to be preserved, without containing components which are detrimental to health, such as other similar described materials containing palladium derivatives.

This document also explains the oxygen capturing function of the polimeric nanocomposite materials containing nanoclays with cerium oxide or metallic cerium in the presence of hydrogen and oxygen, when the latter occurs naturally in the chemical environment, i.e., it is not supplied on purpose.

In the present invention, the active property of the obtained nanocomposite materials is conferred by the incorporation of cerium oxide or metallic cerium in the nanoclays, which can also contain optionally other organic substances, inorganic substances, metallic substances, or combination thereof, acting as expanders, compatibilizing agents between the clay and the polimeric matrix, as functionality enhancing agents, as metal stabilizing agents or combinations of these functions.

Therefore a first aspect of the present invention relates to a combination comprising hydrogen gas or a hydrogen donor agent and a nanoclay comprising at least one intercalated or supported cerium compound, where said cerium compound is selected from metallic cerium, cerium(III) oxides and cerium(IV) oxides.

The nanoclay used in the present invention may or may not include an organic or inorganic modification.

In a particular embodiment, the composition comprises a hydrogen donor agent.

In a particular embodiment, the hydrogen gas or the hydrogen donor agent is physically mixed with or intercalated or supported in a nanoclay. In a particular embodiment, the hydrogen gas or the hydrogen donor agent is physically mixed with or intercalated or supported in the nanoclay containing the cerium compound. In another particular embodiment, the hydrogen gas or the hydrogen donor agent is physically mixed with or intercalated or supported in a nanoclay not containing cerium.

In another particular embodiment, the hydrogen gas or the hydrogen donor agent is in free form in the combination of the invention, i.e., without being part of a nanoclay.

In a particular embodiment, the hydrogen gas or the hydrogen donor agent is not in the nanoclay containing the cerium compound. Preferably, the hydrogen gas or the hydrogen donor agent is physically mixed with or intercalated or supported in a nanoclay not containing cerium or in free form in the combination of the invention.

In a particular embodiment, the hydrogen gas or the hydrogen donor agent and the cerium compound are at a molar ratio between 20:1 and 80000:1, preferably between 50:1 and 80000:1, more preferably between 50:1 and 50000:1, still more preferably between 100:1 and 50000:1.

In the present invention, nanoclays are understood as those layered clay structures which disintegrate for being dispersed when incorporated into plastic matrices. They preferably refer to layered clay structures having micrometric size which disperse into nanometric size (below 100 nm) when incorporated into plastic matrices. In a particular embodiment, the term nanoclay refers to clays having at least one dimension less than approximately 30000 nm, preferably less than approximately 10000 nm, more preferably between approximately 1 nm and approximately 10000 nm.

The nanoclay described is selected from the group consisting of layered silicates and/or layered double hydroxides. Preferably, the nanoclays are selected from the group consisting of clays such as montmorillonite, kaolinite, bentonite, smectite, hectorite, sepiolite, gibbsite, dicktite, nacrite, saponite, halloysite, vermiculite, mica and/or mixtures thereof or mixtures with other phyllosilicates, mainly with or without organic and/or inorganic surface modification. Still more preferably, the nanoclays are selected from montmorillonite or kaolinite.

In the combination of the present invention, the cerium oxides and the metallic cerium are the modifiers primarily conferring active properties to the nanoclays. The described nanoclays can optionally contain other organic modifiers which change the chemical nature of the surface of the clays. When surface modification is applied, in addition to introducing or accentuating the activity by incorporating compatibilizing agents with active properties, it allows increasing nanoclay and polimeric matrix compatibility, to achieve better clay dispersion and distribution. A morphology with an optimum dispersion and surface exposure of active substances (cerium oxide or metallic cerium) is thus achieved.

In the present invention, hydrogen donor agent is understood as a molecule containing hydrogen in its composition and which is capable of transferring it to other molecules by means of several types of reactions such as, but not limited to, redox reactions, electrochemical reactions, hydrolysis reactions, enzymatic reactions, etc. Preferably, the term "hydrogen donor agent" refers to a compound or system capable of generating a hydrogen molecule.

In a preferred embodiment, the hydrogen donor agent is selected from the group comprising alkali metals, alkali and alkaline earth metal hydrides, alkali metal borohydrides, organic aluminum and tin hydrides, among others. In a more preferred embodiment, the hydrogen donor agent is sodium borohydride.

The inventors have found that when the hydrogen gas or the hydrogen donor agent is physically mixed with or incorporated or supported in a nanoclay, products capable of catalyzing the reaction between oxygen and hydrogen for generating water with higher reaction kinetics are obtained.

Therefore in a particular embodiment, the hydrogen gas or the hydrogen donor agent is physically mixed with or incorporated or supported in a nanoclay, preferably in a nanoclay not containing cerium. In a particular embodiment, the hydrogen gas or the hydrogen donor agent is physically mixed with or incorporated or supported in montmorillonite, preferably montmorillonite not containing cerium.

In one embodiment, the hydrogen donor agent is sodium borohydride physically mixed with or incorporated or supported in a nanoclay, preferably in a nanoclay not containing cerium. In a particular embodiment, the hydrogen donor agent is sodium borohydride physically mixed with or incorporated or supported in montmorillonite, preferably montmorillonite not containing cerium.

In a particular embodiment, the hydrogen gas or the hydrogen donor agent is contained in the nanoclay at a proportion from 1% to 80% by weight, both values inclusive, with respect to the total weight of the nanoclay containing it. Preferably at a proportion from 1% to 40% by weight, both values inclusive, and still more preferably from 5 to 30% by weight with respect to the total weight of the nanoclay containing it.

In a particular embodiment, the hydrogen donor agent is sodium borohydride physically mixed with or incorporated or supported in montmorillonite, preferably montmorillonite not containing cerium, and the cerium compound is intercalated or supported in a nanoclay selected from montmorillonite or kaolinite which can optionally include an organic or inorganic modification.

As used herein, the term "intercalated" refers to the fact that it is located between the layers of the clay. The term "supported" refers to the fact that it is deposited on the surface of the clay. The term "physically mixed" refers to the product obtained by means of the simply contacting and mixing and optionally co-milling the hydrogen gas or the hydrogen donor agent and the nanoclay.

In a preferred embodiment, the cerium compounds will be contained in the nanoclays at a proportion from 0.01 to 50% by weight, both values inclusive, with respect to the total weight of the nanoclay containing it. More preferably at a proportion from 1% to 40% by weight, both values inclusive, and still more preferably from 5 to 30% by weight with respect to the total weight of the nanoclay containing it.

In a preferred embodiment, the nanoclay further comprises compatibilizing or intercalating agents selected from metallic substances, inorganic substances, organic substances or hybrid substances in the layered structure. The compatibilizing or intercalating agents refer to substances capable of increasing nanoclay and polimeric matrix compatibility and to substances capable of going between the layers of clay laminates and binding to their surface, respectively. In this same sense, the compounds to be intercalated or supported are selected, without limitation, from the group consisting of PVOH (polyvinyl alcohol), EVOH (ethylene vinyl alcohol copolymer) and derivatives from the same family, and/or biopolymers such as peptides and proteins which are natural or synthesized chemically or by genetic modification of microorganisms or plants and polysaccharides which are natural or synthesized chemically or by genetic modification of microorganisms or plants and polypeptides, lipids, nucleic acids and nucleic acid polymers which are synthesized chemically or by the genetic modification of microorganisms or plants, and biodegradable polyesters such as polylactic acid, polylactic-glycolic acid, polycaprolactone, adipic acid and derivatives and polyhydroxyalkanoates, preferably polyhydroxybutyrate and its copolymers with valerates, biomedical materials such as hydroxyapatites, phosphonium salts and organic phosphate salts. Quaternary ammonium salts can also be intercalated such as mono- and di-alkyl ammonium chlorides and more preferably di(hydrogenated tallow)dimethylammonium chloride, although salts allowed for food contact will preferably be used (i.e., salts listed in the lists of monomers and other starting substances authorized by law for use in manufacturing plastic materials and objects) such as, without limitation, hexadecyltrimethylammonium bromide, polyethylene glycol esters with aliphatic monocarboxylic acids (C6-C22) and their ammonium and sodium sulfates, perfluorooctanoic acid and its ammonium salt, copolymers N-metacryloyloxyethyl-N,N-dimethyl-N-carboxymethylammonium chloride, bis(2-hydroxyethyl)-2-hydroxypropyl-3-(dodecyloxy)methylammonium chloride; and chitosan and its derivatives.

When the intercalated organic material is EVOH or any material from the EVOH family with molar contents of ethylene preferably less than 48%, and more preferably less than 29%, these molar contents are preferably brought to saturation in an aqueous medium or in specific alcohol type solvents and alcohol and water mixtures, more preferably water and isopropanol mixtures at proportions where the volume of water is greater than 50%.

On the other hand, the biopolymers with or without plasticizers, with or without crosslinking agents and with or without emulsifiers or surfactants or another type of nanoadditives, are from the group consisting of synthetic and natural (plant or animal) polysaccharides such as cellulose and derivatives, carrageenans and derivatives, alginates, dextran, gum arabic and preferably chitosan or any of its natural and synthetic derivatives, more preferably chitosan salts and still more preferably chitosan acetate, and both plant and animal proteins such as corn proteins (zein), gluten derivatives, such as gluten or its gliadin and glutenin fractions and more preferably gelatin, casein and soy proteins and derivatives thereof, as well as natural or synthetic polypeptides preferably of the elastin type obtained chemically or by genetic modification of microorganisms or plants, lipids such as beeswax, carnauba wax, candelilla wax, shellac and fatty acids and monoglycerides and/or mixtures of all the above.

In a preferred embodiment, the compatibilizing or intercalating agents will be contained in the nanoclays at a proportion from 0.01 to 50% by weight, both values inclusive, with respect to the total weight of the nanoclay containing it. Preferably at a proportion from 1% to 40% by weight, both values inclusive, and still more preferably from 5 to 30% by weight with respect to the total weight of the nanoclay containing it.

The hydrogen gas or the hydrogen donor agent and the nanoclay comprising the cerium compound can be in the combination, forming or not forming part of the same composition.

Therefore in a particular embodiment, the invention relates to a composition comprising:

a) a nanoclay comprising at least one intercalated or supported cerium compound, where said cerium compound is selected from metallic cerium, cerium(III) oxides and cerium(IV) oxides, and

b) hydrogen gas or a hydrogen donor agent.

In a particular embodiment, said composition is characterized in that the hydrogen gas or the hydrogen donor agent may or may not be intercalated in the layered structure of the nanoclay.

Within this composition, the hydrogen gas or the hydrogen donor agent can be physically mixed with or intercalated or supported in the nanoclay comprising the cerium compound or in a nanoclay not containing cerium, or it can be in free form, as defined above.

In a particular embodiment, the hydrogen donor agents will be contained in this composition, either outside the nanoclays or supported in the nanoclays, at a proportion of 0.01 to 50% by weight, both values inclusive, with respect to the total weight of this composition. In a particular embodiment, the hydrogen gas or the hydrogen donor agent is at a proportion of at least 1% by weight, preferably at least 5% by weight, more preferably at least 10% by weight with respect to the total weight of the composition formed by the hydrogen gas or the hydrogen donor agent and the nanoclay comprising the cerium compound. In a particular embodiment, the hydrogen gas or the hydrogen donor agent is at a proportion from 0.01 to 50% by weight, both values inclusive, with respect to the total weight of the composition formed by the hydrogen gas or the hydrogen donor agent and the nanoclay comprising the cerium compound. Preferably from 0.1 to 50% by weight, more preferably from 1 to 40% by weight, still more preferably from 1 to 30% by weight.

Another aspect of the invention relates to a process for obtaining the composition described above which comprises adding the hydrogen gas or the hydrogen donor agent, either in free form or physically mixed with or intercalated or supported in a nanoclay, to the nanoclay comprising the cerium compound or a precursor thereof, by means of chemical methods, physical methods or combinations of both. In a particular embodiment, the hydrogen donor agent is incorporated in the composition of the invention by means of physical mixture with or without intercalating in the clay.

In a particular embodiment, the process for obtaining the composition of the invention comprises the following steps:

a) reducing the size of natural clays by means of mechanical action, for example by means of milling technologies. This process is carried out until obtaining a particle size below 30 microns in the D90 (designates the particle size corresponding to the 90th percentile, i.e., not more than 10% of the material is above that value).

b) classifying into a range comprised between 0.1 and 100 microns in vibrate sieve, centrifuge, filter-press or any other dry or wet filtration system, preferably reducing the particle size below 25 microns and more preferably below 7 microns in the so called D90.

After step b), the following optional steps can be carried out:

b') removing the organic matter by means of decantation techniques, collecting supernatant or by chemical reaction with oxidizing substances such as sodium hypochlorite and peroxides.

b") removing more specifically crystalline oxides and hard particles not subjected to modification either by means of centrifugation and/or gravimetric processes in solution or by turbo-dryers, preferably by either a dry or wet centrifugation process followed or not followed by an atomization process with controlled depression or by means of any other industrial drying process including lyophilization.

c) obtaining thin layered structures either in liquid suspension or in powder either by means of subsequent drying using either a dry or wet centrifugation process followed or not followed by an atomization process with controlled depression or by means of any other industrial drying process including lyophilization.

Optionally, a step c') of adding expander type precursors (Table 1) to the layered structures can be performed in at least one pass. The term "expander" refers to substances which allow increasing the distance between the sheets of the clay. In a particular embodiment, the expanders are selected from the list indicated in Table 1.

Table 1: Expanders and distance between sheets of certain types of clay generated after adding the expander

| Expander | dexpander (nm) | Expander | dexpander (nm) |
|---|---|---|---|
| Non-modified kaolinite | 0.72 | Non-modified montmorillonite | 0.98 |
| Dimethyl sulfoxide (DMSO) | 1.11 | Polyethylene oxide | 1.12 |
| Silver nitrate | 0.74 | Silver nitrate | 0.99 |
| Silver acetate | 0.74 | Silver acetate | 0.99 |
| Nickel chloride | 0.75 | Nickel chloride | 0.99 |
| Cobalt chloride | 0.76 | Cobalt chloride | 0.99 |
| Copper nitrate | 0.76 | Copper nitrate | 1.00 |
| N-methyl formamide (NMF) | 1.02 | Cellulose acetobutyrate | 1.13 |
| Hydrated hydrazine | 1.03 | Calcium butyrate | 0.92 |
| Water | 0.78 | Sucrose acetoisobutyrate | 1.08 |
| Alcohols | 1.10 | Manganese butyrate | 0.95 |
| Anhydrous hydrazyne | 0.96 | Carboxymethyl starch | >3 |

(continued)

| Expander | dexpander (nm) | Expander | dexpander (nm) |
|---|---|---|---|
| Acetamide | 1.09 | Starch | 1.21 |
| DMSO+Methanol(MeOH) | 1.12 | Hidroxyethyl starch | 1.15 |
| Hexanoic acid | 1.23 | Hydroxypropyl starch | 1.14 |
| Acrylamides | 1.44 | Adonitol | 1.04 |
| Glucose | 1.25 | Sorbitol | 1.19 |
| Archylamide | 1.14 | Dibenzylidene sorbitol | 1.16 |
| Salicylic acid | 1.07 | Ethylene glycol | 0.95 |
| Manganese acetate | 1.41 | Polypropylene glycol | 1.01 |
| Caprolactam | 1.18 | Propylene glycol | 1.01 |
| Vinyl acetate | 1.21 | Glycolic acid | 1.06 |
| Potassium acetate | 1.39 | Triethylene glycol | 1.08 |
| Tannic acid | 1.09 | Tetraethylene glycol | 1.06 |
| Maleic acid | 1.20 | Glycerol | 1.02 |
| Maleic anhydride | 1.20 | 1,2-Propanediol | 1.09 |
| Lactic acid | 1.08 | 1,3-Propanediol | 0.98 |
| Adipic acid | 1.03 | Polyethylene glycol $M_w$=1000 | 1.11 |
| Acetic acid | 1.10 | Polyethylene glycol $M_w$=3400 | 1.12 |
| Acetaldehyde | 0.91 | Sorbitan | 1.09 |
| Butyric acid | 1.01 | Dipropylene glycol | 1.03 |
| Tetrafluoroethylene | 0.98 | Diethylene glycol | 1.04 |
| Chlorotrifluoroethylene | 1.05 | Vinyl pyrrolidone | 1.23 |
| Hexamethylene | 1.02 | Vinyl versatate | 1.11 |

The expanders from the group consisting of DMSO, alcohols, acetates, or water or mixture thereof, and metallic silver, copper, iron, titanium, cerium, zinc, nickel or cobalt salts activate the thin structures by means of an initial increase in the basal spacing of the sheets and modify the surface characteristics of the clay and/or mixture of the foregoing.

The penetration and/or stabilization of the precursors will be sped up, without limitation, by means of

- increasing the temperature,
- homogenizing under turbulent regimen,
- ultrasound,
- applying supercritical fluids,
- deflocculating agents such as acrylates and/or phosphates,
- generating pressure higher than the atmospheric pressure
- acidifying the aqueous medium by means of adding an acid
- mixture of the foregoing.

Optionally, a step of drying the expanders can be carried out before washing or not with water or alcohols. Said drying can be performed by evaporation in an oven, lyophilization, centrifugation and/or gravimetric processes in solution or turbo-dryers or by atomization.

d) adding the metallic cerium or cerium oxide precursors to be intercalated in the nanoclays. Said precursors are selected from the group consisting of metal alkoxides or organic and/or inorganic salts of cerium metals, more typically cerium(III) nitrate hexahydrate and ammonium cerium(IV) nitrate.
e) forming the cerium oxide or metallic cerium by means of applying a complete or partial physical or chemical treatment, or combination of both. The cerium oxide or metallic cerium particles supported on the nanoclays are thus obtained from the metallic precursor. The formulation is carried out, without limitation, by means of sol-gel processes, chemical precipitation or hydrolysis by means of adding acids, bases, oxidizing substances, reduction and subsequent complete or partial oxidation, or solvents, hydrothermal precipitation, electroplating, high temperature annealing (100-1200°C), UV radiation, infrared radiation and/or microwave radiation. Upon ending any of these treatments, the degree of oxidation of the metallic core would have been completely or partially modified forming metallic oxide, conferring the material active or passive properties.

f) adding the hydrogen donor agent by chemical methods, physical methods or combinations of both. One of the ways of incorporating the hydrogen donor agent in the composition of the invention is through physical mixture with or without intercalating in the nanoclay. The clays for the physical mixture may or may not have been processed according to the already described methods for reducing particle size, classifying, removing organic matter or adding compatibilizing agents; the physical mixture with the hydrogen donor agent can even be performed with the nanoclays already modified with cerium oxide or metallic cerium. The hydrogen donor agents include, but are not limited to, alkali metals, alkali and alkaline earth metal hydrides, and alkali metal borohydrides, or organic compounds such as organic aluminum and tin hydrides. Additionally, the hydrogen donor agents could be directly added when processing with the plastic matrix in a process before or after the incorporation of the clays with cerium, or they could be part of another part which is in the material, for example, in another component or constitutive layer of the container. To facilitate dispersion, any type of compatibilizing or dispersing agents can additionally be added such as paraffins, beeswax, mineral oils, plant oils, carnauba wax, candelilla wax, shellac, functionalized wax, fatty organic compounds such as fatty acids, fatty alcohols and monoglycerides and/or mixtures of all the above; and/or by applying methods such as milling, melting, dissolving, melt mixing, pressing, or combination thereof.

Other hydrogen sources for the oxidation reaction of the oxygen catalyzed by the cerium compounds incorporated in the clay considered in this invention are without limitation:

- biohydrogen production reactions, where an organic substrate such as glucose or cellulosic materials are oxidized by enzymes or bacteria to produce hydrogen and carbon dioxide.
- hydrolytic reactions of Al-M alloys (where M= Ca, Bi, Zn, Mg, Zn) in the presence of salts such as NaCl.
- reaction of alkaline earth and aluminum hydroxides
- modification of the atmosphere contacting the composite or the container containing the composite so that it contains hydrogen.

Optionally, after steps c), c'), e) or f) an optional step of intercalating compatibilizing or intercalating agents selected from the list described above in aqueous base or with polar solvents or in aqueous acid solutions can be carried out.

In any of the preceding steps involving a wet state, deflocculating agents, such as without limitation, polyphosphates and/or acrylates are also optionally added to facilitate processing.

Another aspect of the present invention relates to the use of the composition described above for manufacturing polimeric materials.

In a particular aspect, the invention relates to the use of the combination of the invention as an additive in plastic, preferably plastic for forming containers.

Another aspect of the invention relates to nanocomposite materials comprising the composition based on nanoclays as defined above and a polimeric matrix.

In a particular embodiment, the combination of the invention further comprises a polimeric matrix.

In one embodiment of the invention, the combination of the invention is in the form of nanocomposite material comprising the nanoclay which comprises the cerium compound, the hydrogen gas or the hydrogen donor agent and the polimeric matrix.

In another embodiment, the hydrogen gas or the hydrogen donor agent and the nanoclay comprising at least one cerium compound are in the combination within different compositions or materials.

In one embodiment, the polimeric matrix and the nanoclay comprising the cerium compound form a nanocomposite material and the hydrogen gas or the hydrogen donor agent form part of another composition or material within the combination of the invention. By way of example, the nanoclay comprising at least one cerium compound can be incorporated in a polimeric matrix and the hydrogen gas or the hydrogen donor agent can be incorporated in another polimeric matrix. In a particular embodiment of the present invention, the two polimeric matrices can be integrated in a film of several layers where one of the layers comprises the nanoclay comprising at least one cerium compound incorporated in a polimeric matrix and another one of the layers comprises the hydrogen gas or the hydrogen donor agent incorporated in another polimeric matrix.

The terms "polimeric matrix" and "plastic matrix" are used interchangeably in this document to refer to a matrix comprising a polymer. In particular, the plastic or polimeric matrices are selected from the group consisting of thermoplastics, thermosetting materials, elastomers and biopolymers.

Preferably, the thermoplastic, thermosetting and elastomeric matrices are selected from the following list: polyolefins, polyesters, polyamides, polyimides, polyketones, polyisocyanates, polysulfones, styrene plastics, phenolic resins, amide resins, ureic resins, melamine resins, polyester resins, epoxide resins, polycarbonates, polyvinylpyrrolidones, epoxy resins, polyacrylates, rubbers and gums, polyurethanes, silicones, aramids, polybutadiene, polyisoprenes, polyacrylonitriles, PVDF (polyvinylidene fluoride), PVA (polyvinyl acetate), PVOH (polyvinyl alcohol), EVOH (ethylene vinyl alcohol copolymer), PVC (polyvinyl chloride) or PVDC (polyvinylidene chloride).

Preferably, the biopolymers are selected from the group consisting of proteins, polysaccharides, lipids and biopolyesters or any combination thereof. These polymers and biopolymers may contain any typical additive which is added during plastic and bioplastic manufacture and processing. Additionally, they can comprise agents which are selected from compounds with properties as a barrier against electromagnetic radiation, fire resistance compounds, compounds with antimicrobial activity, low molecular weight substances with other active or bioactive character such as natural or synthetic antioxidant compounds, oxygen scavengers, drugs, enzymes, bioavailable calcium compounds, probiotics, marine oils, symbiotics or prebiotics.

In a particular embodiment, the polimeric matrix is a thermoplastic polymer, more preferably a polyester. In a preferred embodiment, the polimeric matrix is polyethylene terephthalate (PET).

According to another preferred embodiment, the plastic matrix is at a proportion from 5% to 99.995% by weight, both values inclusive, with respect to the total weight of the nanocomposite material. Preferably in a proportion from 20% to 99.995%, both values inclusive, more preferably from 60 to 99.995%, and still more preferably from 90% to 99.995%.

The nanoclays comprising the cerium compound are introduced as layer-type loads either in a liquid state or a dry state in polimeric matrices to form the new nanocomposite materials. According to a preferred embodiment, the nanoclays in plastic matrices are in a proportion from 0.0005% to 50% by weight with respect to the total weight of the nanocomposite material, preferably from 0.005% to 40%, more preferably from 0.005% to 30%, and still more preferably from 0.005 to 10%.

In a particular embodiment, when the combination of the invention comprises a polimeric matrix, the hydrogen or the hydrogen donor agent is at a proportion from 0.5% to 50% by weight with respect to the total weight of the combination, preferably from 0.5% to 30%, more preferably from 1% to 20%, still more preferably from 1% to 10%.

In a particular embodiment, when the hydrogen or the hydrogen donor agent forms part of the nanocomposite material comprising the nanoclay with cerium and the polimeric matrix, it is at a proportion from 0.5% to 50% by weight with respect to the total weight of the nanocomposite material, preferably from 0.5% to 30%, more preferably from 1% to 20%, still more preferably from 1% to 10%.

An additional aspect of the present invention relates to a process for manufacturing the polimeric nanocomposite material described above with oxygen scavenging properties. In a particular embodiment, this process comprises adding the nanoclay-based composition described above, either in a liquid state or dry state, during any one of the steps for processing a polimeric matrix to obtain a masterbatch or an enriched batch or the final composition.

In another particular embodiment, when the hydrogen or the hydrogen donor agent forms part of the nanocomposite material comprising the nanoclay with cerium and the polimeric matrix, it is added during the processing with the polimeric matrix in a step before or after incorporating the clay comprising the cerium compound.

The oxygen scavenging activity of the nanocomposite material is derived from the capacity of the cerium oxide or of the metallic cerium contained in the clay to catalyze the reaction for combining oxygen with hydrogen. The hydrogen required for this reaction can come from either organic or inorganic precursors physically mixed with nanoclays and/or intercalated in nanoclays and incorporated in the nanocomposite, or from the hydrolysis reactions of organic or inorganic compounds catalyzed by enzymes or bacteria which are generated in the medium, or from the hydrolysis of alloys, or from the prior modification of the system atmosphere, among other sources. The oxygen required for this reaction is provided naturally by the system; because it is in the atmosphere contacting the material or because it is taken in from the outside in the case of a container, or because it is part of the atmosphere of the packaged product (headspace).

Preferably, the polimeric matrix is processed by means of any manufacturing method related to the plastic processing industry such as extrusion, application or curing processes typically used for manufacturing and forming thermosetting materials and elastomers, injection, blowing, compression molding, resin transfer molding, calendaring, heat shock, internal mixing, ultrasound, coextrusion, co-injection and any combination thereof.

Optionally, the following can be carried out:

- precipitating the combination of nanoclays and modifiers by evaporation to obtain a nanoadditive powder;
- precipitating the plastic or polimeric matrix in a solution comprising the nanoclays with or without the modifiers, by means of drying methodologies such as heating and/or centrifugation and/or gravimetric processes in solution or turbo-dryers and/or atomization processes; by cooling or by adding a precipitating agent, to obtain a masterbatch or a nanoadditive concentrate in a plastic matrix.

In any step of the aforementioned processes, to obtain nanoclays and prior to mixing with the plastic, a post-processing of the obtained clay can be applied to reduce its particle size either in a liquid state by means of classification and/or in a dry state by means of mechanical processes.

The clay concentrates in polimeric matrix can be treated in the following manners in a single step or in several of the steps described below:

a) crushing to give rise to a particulate product by grinding.

b) processing by means of any plastic processing methodology to obtain chippings in solid state.

c) processing by means of any manufacturing process related to the plastic processing industry such as extrusion, injection, blowing, compression molding, resin transfer molding, calendaring, heat shock, internal mixing, ultrasound, coextrusion, co-injection and mixture thereof.

d) using as additive on any plastic matrix (including the mentioned biopolymers and biomedical materials) in a conventional plastic processing path such as those mentioned above.

The incorporation of these nanoadditives based on clays functionalized with cerium oxide or metallic cerium in plastics is advantageous due to the ease of dispersing of the functionalized and compatibilized nanoclays in the plastic matrices. Furthermore, the nanoadditives additionally enhance the passive properties, i.e., the physical properties, and with small additions, new customized functionalities are achieved with minimum impact on the good inherent properties, such as the optical properties and the tenacity, of the plastic matrix. Excellent results are thus obtained with less nanoadditive additions, and the nanocomposites can be formulated in a more efficient, versatile manner and with the function provided by the cerium oxide or metallic cerium.

The present invention covers the synthesis of cerium oxide or metallic cerium in nanoclays (layered phyllosilicates). These modified nanoclays have the necessary heat stability and compatibility for being incorporated in polimeric matrices under different processing conditions and thus producing the corresponding nanocomposites. The cerium oxide or the metallic cerium contained in the clay act as the catalysts of the process of producing water from oxygen and hydrogen.

In a particular embodiment, the combination of the invention is in the form of a container. In a particular embodiment, the hydrogen gas or the hydrogen donor agent, the polimeric matrix and the nanoclay comprising the cerium compound are part of one and the same composition or material within the container. In another embodiment, these components form part of several compositions or materials within the container. In one embodiment, the polimeric matrix and the nanoclay comprising the cerium compound form part of one and the same composition or material within the container and the hydrogen gas or the hydrogen donor agent forms part of another composition or material within the container.

In a particular embodiment, the hydrogen gas or the hydrogen donor agent is at a proportion from 0.1% to 50% by weight with respect to the total weight of the container, preferably from 0.5% to 30%, more preferably from 1% to 20%, still more preferably from 1% to 10%.

In a particular embodiment, the nanoclay comprising the cerium compound is at a proportion from 0.0005% to 50% by weight with respect to the total weight of the container, preferably from 0.005% to 40%, more preferably from 0.005% to 30%, and still more preferably from 0.005 to 10%.

Another aspect of the present invention relates to the use of the combinations or of the nanocomposite materials described above for manufacturing plastic items or containers, for example, for the pharmaceutical sector, food sector, automotive sector, electronic sector, and in any sector where the properties of the materials presented herein are required.

Preferably, the invention relates to the use of the combinations or of the nanocomposite materials described above for the manufacturing of plastic items for applications in packaging oxygen- or oxidation-sensitive products. In a particular embodiment, these plastic items or containers are selected from films, sheets, bags, trays, bottles, bins or receptacles, for example.

In a particular embodiment, the invention relates to the use of the described nanocomposite materials for the preparation of food containers (trays, films, bottles, bags), with simple structures (single-layer) or composite structures (multilayer), formed from a single polymer or combinations thereof with or without additives. Finally, when the nanocomposite material is enhanced with nanoclays containing cerium oxide or metallic cerium, a physical or chemical treatment can be applied for stabilizing or for completely or partially changing the oxidation state of the metallic core intercalated in the plastic matrix, either before, while or after forming same, whether or not it has already been previously applied. These treatments include without limitation: heat treatments (100-1200°C), UV radiation, infrared radiation, microwave radiation and/or chemical treatment with acids, bases, oxidizing or reducing agents, reduction followed by complete or partial oxidation; or treatments with solvents. Upon ending any of these treatments, the degree of oxidation of the metallic core would have been completely or partially modified forming metal oxide and when required also the metal in its native state, conferring the nanocomposite advantageous active and/or passive properties.

Description of the Drawings

Figure 1 shows the X-ray diffractograms (WAXS) of non-modified kaolinite and of kaolinite modified with cerium oxide (Kao-CeO$_2$) obtained according to the method described in Example 1.

Figure 2 shows the X-ray diffractograms (WAXS) of non-modified kaolinite and of kaolinite modified with metallic cerium (Kao-Ce°) obtained according to the method described in Example 2.

Figure 3 shows the X-ray diffractograms (WAXS) of montmorillonite organo-modified with C16 and of the same clay modified with metallic cerium (MMT-C16-Ce°) obtained according to the method described in Example 3.

Figure 4 shows the graph of oxygen scavenging capacity in the headspace of kaolinites modified with metallic cerium (Kao-Ce°) and with cerium oxide (Kao-CeO$_2$), in the presence of a physical mixture of 1:1 MMT:NaBH$_4$ as a hydrogen generator according to the method described in Example 5.

Figure 5 shows the graph of oxygen scavenging capacity in the headspace of the PET nanocomposites with 0.25% Kao-Ce° or Kao-CeO$_2$ load in the presence of a physical mixture of 1:1 MMT:NaBH$_4$ as a hydrogen generator according to the method described in Example 8.

Figure 6 shows the graph of oxygen scavenging capacity in the headspace of the PET nanocomposites with 0.25% Kao-Ce° or Kao-CeO$_2$ load in reducing atmosphere according to the method described in the Example 9.

Examples

All the features and advantages described, as well as other features and advantages typical of the invention, will be better understood with the following examples. On the other hand, the examples shown below are non-limiting illustrative examples to enable better understanding the present invention.

Example 1: Synthesis and intercalation of cerium oxide (ceria, CeO$_2$) in kaolinite type clays using ammonium hydroxide as oxidizing agent (Kao-CeO$_2$).

A 0.5 M solution of Ce(NO$_3$)$_3$*6H$_2$O was added to a kaolinite suspension with 28.6% solid content, particle size of 0.9 microns (d(0.5)). Ultraturrax at medium power and ultrasound at 25% were applied to the resulting mixture which was then stirred for 16 hours at 40°C. After this time, the heat source was removed and 75 ml of 25% NH$_4$OH were added under stirring. It was filtered by suction, washed with small portions of water and acetone, and dried in a convection oven at 80°C.

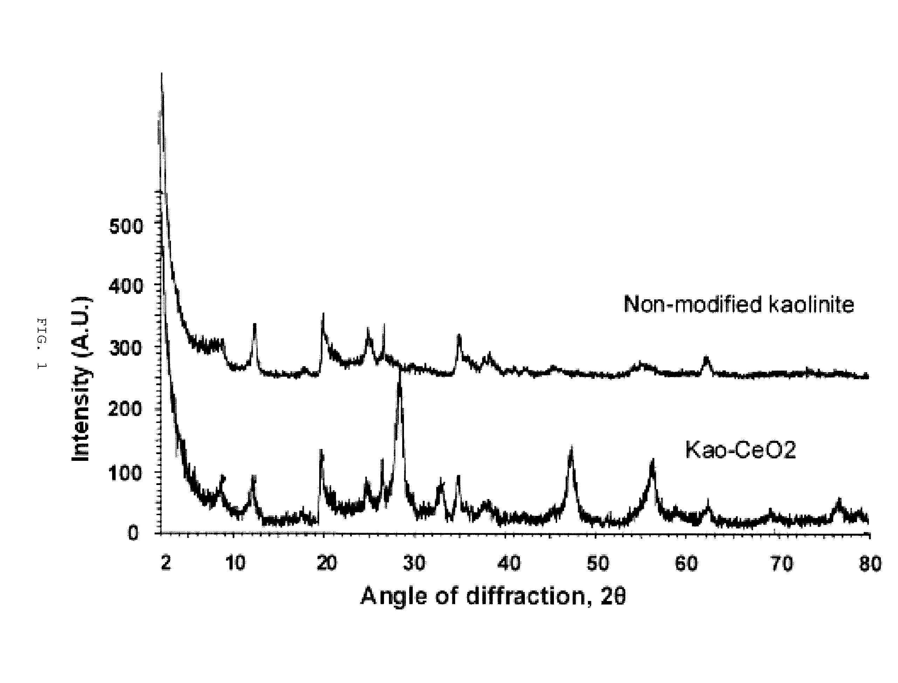

The obtained clay, which contains at least 22% cerium, was characterized by X-ray diffraction (Figure 1). The diffractograms demonstrate that the structure of the clay remains same after the modification treatment since there is no shift in nor disappearance of the basal peak of kaolinite (12.4°, 2θ) or of laillite (8.9°, 2θ). The resulting material contains CeO$_2$ (cerianite), with typical reflections at 28.64°, 47.29° and 56.40° (2θ).

Example 2: Synthesis and intercalation of metallic cerium (Ce°) in kaolinite type clays using sodium borohydride as a reducing agent (Kao-Ce°).

A 0.6 M solution of Ce(NO$_3$)$_3$*6H$_2$O was added to a kaolinite suspension with 28.6% solid content, particle size 0.9 microns (d(0.5)). Ultraturrax at medium power and ultrasound at 25% were applied to the resulting mixture which was then stirred for 16 hours at 40°C. After this time, the heat source was removed and the mixture was bubbled with nitrogen for 30 minutes. A 1.5 M solution of NaBH$_4$ was prepared and slowly added, under nitrogen bubbling, to the clay dispersion. The mixture was left to react for another 2 hours under inert atmosphere. It was filtered by suction, washed with small portions of water and acetone, and dried in a vacuum oven at 80°C.

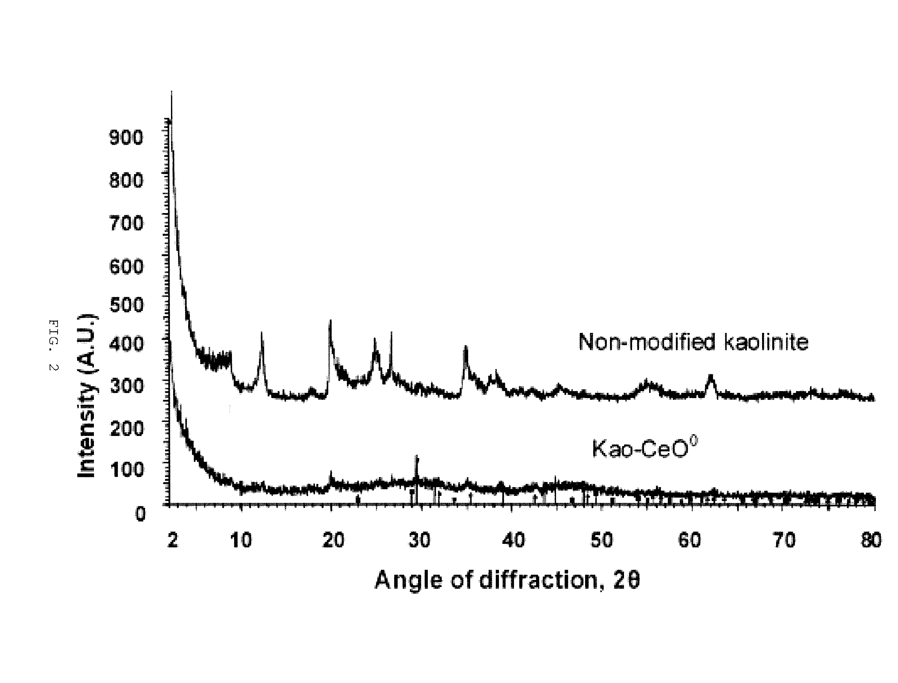

The clay obtained, which contains at least 20% cerium, was characterized using X-ray diffraction and compared with the non-modified starting clay (see Figure 2).

Example 3: Synthesis and intercalation of metallic cerium (Ce°) in montmorillonites organo-modified with hexadecyltrimethylammonium bromide, C16, using sodium borohydride as a reducing agent (MMT-C16-Ce°).

Ultraturrax at medium power was applied to a montmorillonite suspension with 28% solid content, and a 4% solution of hexadecyltrimethylammonium bromide (C16) was then added. The resulting dispersion was heated to 60°C and stirred for 20 hours. After this time, the heat source was removed, the clay was filtered and different washing cycles with water were applied to remove the free surfactant. The resulting clay is redispersed in water at a proportion of 12.5% in solids, Ultraturrax at medium power was applied for 5 minutes, a 0.6 M solution of Ce $(NO_3)_3*6H_2O$ was added, it was then stirred for 16 hours at 40°C.

After this time, the heat source was removed and the mixture was bubbled with nitrogen for 30 minutes. A 1.5 M solution of $NaBH_4$ was prepared and slowly added, under nitrogen bubbling, to the clay dispersion. The mixture was left to react for another 2 hours under inert atmosphere. It was filtered by suction, washed with small portions of water and acetone, and dried in a vacuum oven at 80°C.

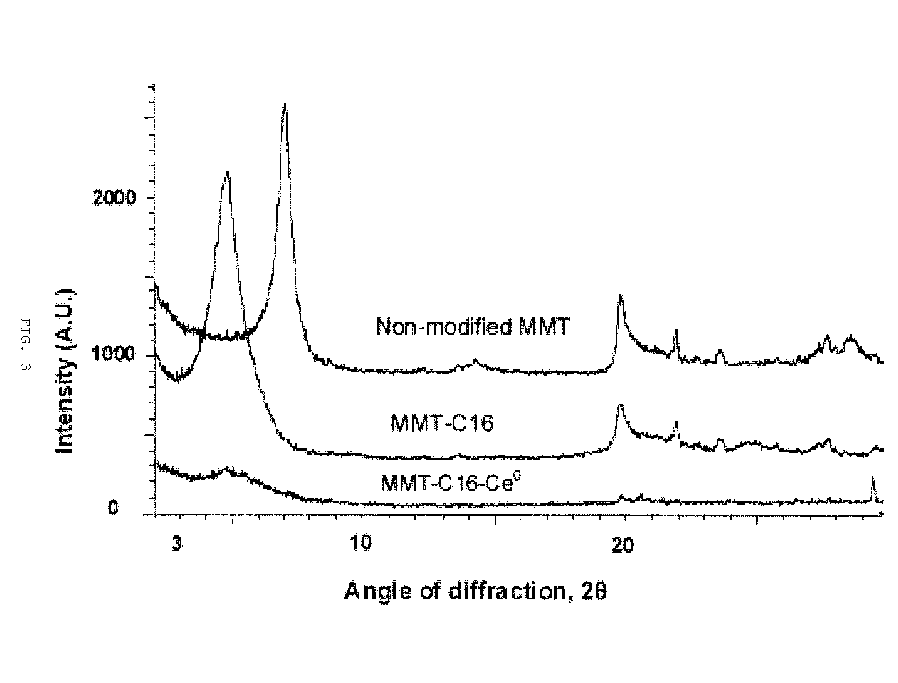

The clay obtained, which contains at least 20% cerium, was characterized using X-ray diffraction and compared with the starting clay (see Figure 3).

Example 4. Preparation of a physical mixture of 1:1 montmorillonite (MMT) and sodium borohydride ($NaBH_4$) as a hydrogen generator (MMT:$NaBH_4$).

15 g of sodium borohydride ($NaBH_4$) and 15 g of montmorillonite (MMT) were weighed and grounded for 25 seconds in a planetary mill.

Example 5. Oxygen scavenging capacity in the headspace of kaolinites modified with metallic cerium (Kao-Ce°) and with cerium oxide (Kao-$CeO_2$), in the presence of a physical mixture of 1:1 MMT:$NaBH_4$ as a hydrogen generator.

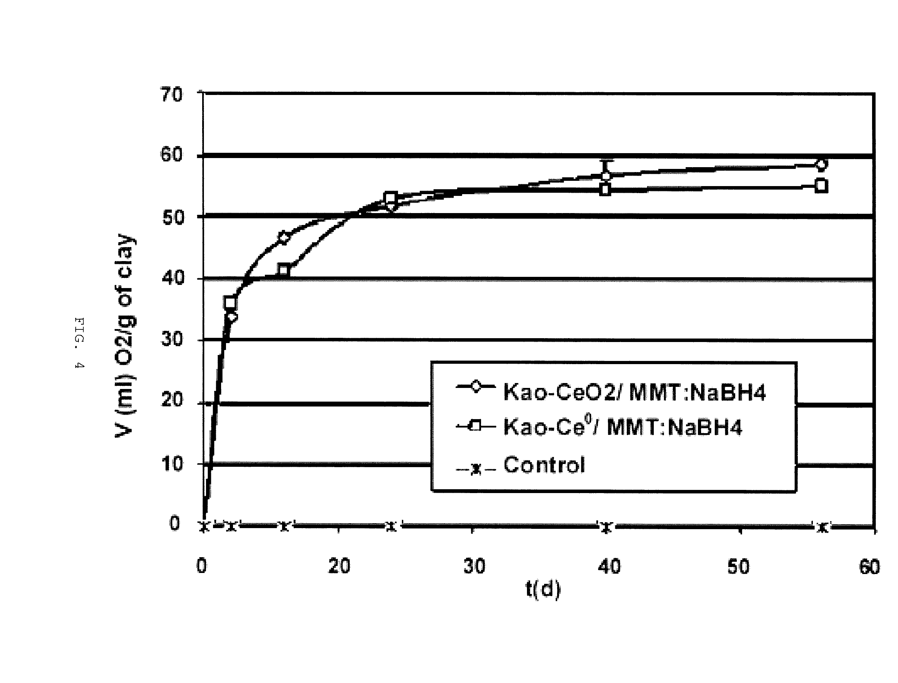

In 40 ml vials, 0.025 g of Kao-Ce° and 0.025 g of MMT:$NaBH_4$ were weighed in triplicate for each measurement point in time. A cell was placed inside each vial with 1 ml of water to assure 100% relative humidity, and each vial was closed with a control type stopper, with an opened-closed switch and a needle inlet. This method was repeated using Kao-$CeO_2$ and the physical mixture of MMT:$NaBH_4$. Clays of the cerium without the physical hydrogen generating mixture were evaluated as control systems. The stoppers were left in the "closed" position during the assay and the vials were placed in a climate-controlled space at 25°C, under constant artificial light. The oxygen content was measured between 1 and 23 days using an electrochemical oxygen sensor. The results of the scavenging capacity of the evaluated systems (Figure 4) indicate that the kaolinites of cerium (control) alone are not capable of absorbing oxygen. However, the combination of the kaolinites containing cerium oxide or metallic cerium with the MMT:$NaBH_4$ mixture as a hydrogen generator show an absorbent performance from day one of exposure, and is capable of absorbing between 55 and 58 ml of oxygen per gram of clay after 23 days. These results confirm that it is consuming oxygen due to the reaction with the hydrogen provided to the medium by the MMT:$NaBH_4$ mixture. On the other hand, the results indicate that both the metallic cerium and the cerium oxide are catalytically active compounds, since there are no significant differences in the oxygen absorption between Kao-$CeO_2$ and Kao-Ce°.

Example 6: Preparation of polyethylene terephthalate (PET) nanocomposites with 0.25% Kao-Ce° or 0.25% Kao-$CeO_2$ with 5% MMT:$NaBH_4$ as a hydrogen generator

In the chamber of a plastograph previously preheated to 260°C, 15.16 g of PET, 0.04 g of Kao-Ce° and 0.8 g of MMT:$NaBH_4$ were alternately added at a mixing speed of 5 rpm. Once the material was added, the shear was increased to 60 rpm and the material was left to mix for 3 minutes. After this time, the melt mixed material was collected and transformed into plates of approximately 100 microns thick by compression in a hot plate hydraulic press at 260°C and applying a pressure of 2 MPa for 4 minutes. The plates were cooled by immersion in water, dried and kept in a vacuum dryer until their characterization. This method was repeated using Kao-$CeO_2$ and MMT:$NaBH_4$; only incorporating the clays containing cerium; and for the preparation of a control sample, incorporating only 5% MMT:$NaBH_4$ load in the PET.

Example 7. Preparation of polyethylene terephthalate (PET) nanocomposites with 0.25% Kao-Ce° or 0.25% Kao-$CeO_2$ with 2.5% $NaBH_4$ as a hydrogen generator using a dispersing agent

In the chamber of a plastograph previously preheated to 260°C, 15.48 g of PET were melted at a mixing speed of 5 rpm. 0.04 g of Kao-Ce° and 0.4 g of $NaBH_4$ previously grounded with mineral oil were then added. Once the material was added, the shear was increased to 60 rpm and it was left to mix for 3 minutes. After this time, the melt mixed material was collected and transformed into plates of approximately 100 microns thick by compression in a hot plate hydraulic press at 260°C and applying a pressure of 2 MPa for 4 minutes. The plates were cooled by immersion in water, dried and kept in a vacuum dryer until their characterization. This method was repeated using Kao-$CeO_2$ and $NaBH_4$ grounded with mineral oil.

Example 8. Oxygen scavenging capacity of PET nanocomposites with 0.25% Kao-Ce° or Kao-CeO$_2$ load in the presence of a physical mixture of 1:1 MMT:NaBH$_4$ as a hydrogen generator.

The following nanocomposites were evaluated in this assay:

$$PET+ \ 0.25\% \ Kao-Ce° \ + \ 5\% \ MMT:NaBH_4$$

$$PET+ \ 0.25\% \ Kao-CeO_2 \ + \ 5\% \ MMT:NaBH_4$$

$$PET+ \ 5\% \ MMT:NaBH_4$$

In 40 ml vials, 0.5 g of each PET nanocomposite were weighed in triplicate for each measurement point in time. A cell was placed inside each vial with 1 ml of water to assure 100% relative humidity, and each vial was closed with a control type stopper, with an opened-closed switch and a needle inlet. The nanocomposite with the physical hydrogen generating mixture MMT:NaBH$_4$ was evaluated as control systems. The stoppers were left in the "closed" position during the assay and the vials were placed in a climate-controlled space at 25°C, under constant artificial light. The oxygen content was measured between 1 and 29 days using an electrochemical oxygen sensor.

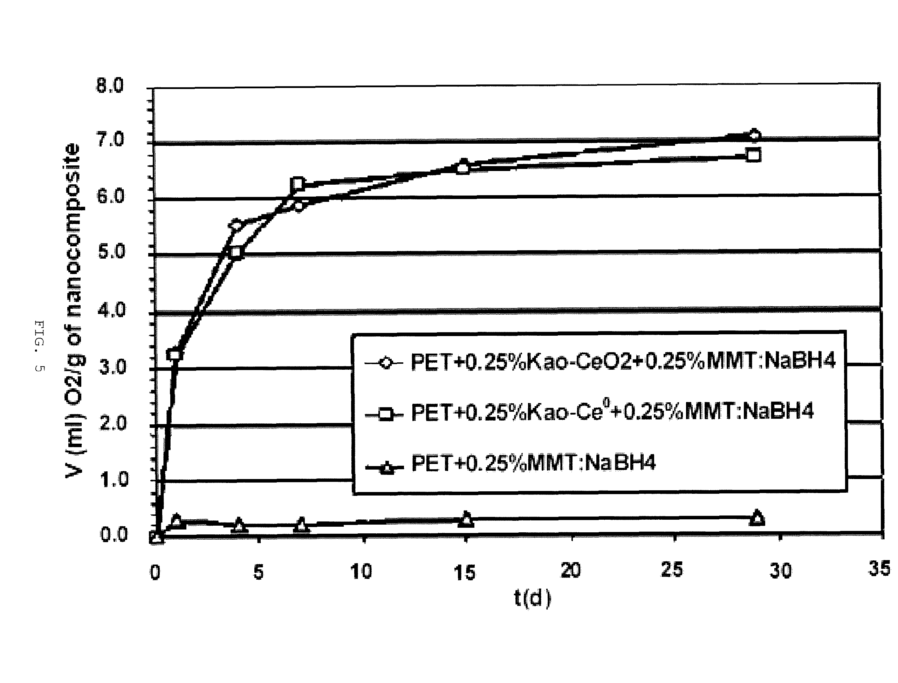

The obtained results (Figure 5) shows that the nanocomposites based on PET and kaolinites modified with cerium oxide or metallic cerium, and which in turn contain a hydrogen source (MMT:NaBH$_4$ in this case), are capable of absorbing between 6.5 and 7 ml of oxygen after 29 days. These results prove that the cerium contained in the clays is acting as the catalyst of the oxidation reaction of the oxygen in the presence of hydrogen, since the control system which only contains the hydrogen source absorbs significantly less amount of oxygen than the active nanocomposites containing cerium. On the other hand, the results indicate that both the metallic cerium and the cerium oxide are catalytically active compounds, since there are no significant differences in the oxygen absorption between the nanocomposite containing the clay with cerium oxide and that containing the clay with metallic cerium.

Example 9. Oxygen scavenging capacity of PET nanocomposites with 0.25% Kao-Ce° or Kao-CeO$_2$ load in the presence of reducing means

The following nanocomposites were evaluated in this assay:

$$PET+ \ 0.25\% \ Kao-Ce°$$

$$PET+ \ 0.25\% \ Kao-CeO_2$$

In 40 ml vials, 0.5 g of each PET nanocomposite were weighed in triplicate for each measurement point in time. A pressure of 1 atm of gas made up of at least 1% H$_2$ was applied in each vial. Each vial was closed with a control type stopper, with an opened-closed switch and a needle inlet. The stoppers were left in the "closed" position during the assay and the vials were placed in a climate-controlled space at 25°C, under constant artificial light. The oxygen content was measured between 1 and 29 days using an electrochemical oxygen sensor.

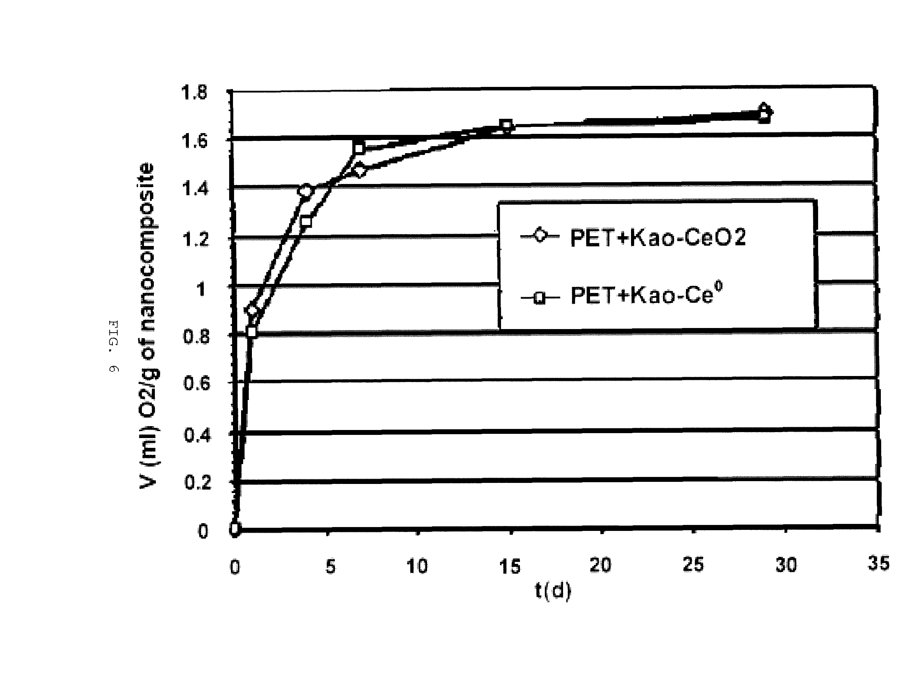

The obtained results (Figure 6) shows that the nanocomposites based on PET and kaolinites modified with cerium oxide or metallic cerium are capable of absorbing up to 1.7 ml of oxygen in reducing atmosphere after 29 days. These results prove that the cerium contained in the clays is acting as the catalyst of the oxidation reaction of the oxygen in the presence of hydrogen.

**Claims**

1. A combination comprising:

   a) a nanoclay comprising at least one intercalated or supported cerium compound, where said cerium compound is selected from metallic cerium, cerium(III) oxides and cerium(IV) oxides, and

b) hydrogen gas or a hydrogen donor agent.

2. The combination according to claim 1, wherein the hydrogen gas or the hydrogen donor agent is not in the nanoclay containing the cerium compound.

3. The combination according to claim 2, wherein the hydrogen gas or the hydrogen donor agent is physically mixed with or intercalated or supported in a nanoclay not containing cerium.

4. The combination according to any of the preceding claims, wherein the nanoclay is selected from the group consisting of clays such as montmorillonite, kaolinite, bentonite, smectite, hectorite, sepiolite, gibbsite, dicktite, nacrite, saponite, halloysite, vermiculite, mica or mixtures thereof or with other phyllosilicates.

5. The combination according to claim 4, wherein the nanoclay is selected from kaolinite or montmorillonite.

6. The combination according to any of the preceding claims, wherein the hydrogen donor agent is selected from the group consisting of alkali metals, alkali and alkaline earth metal hydrides, alkali metal borohydrides and organic aluminum and tin hydrides.

7. The combination according to claim 6, wherein the hydrogen donor agent is sodium borohydride.

8. The combination according to claim 7, wherein the hydrogen donor agent is sodium borohydride physically mixed with or incorporated or supported in montmorillonite.

9. The combination according to any of the preceding claims, wherein the hydrogen gas or the hydrogen donor agent and the cerium compound are at a molar ratio between 20:1 and 80000:1.

10. The combination according to any of the preceding claims, wherein the cerium compound intercalated or supported in the nanoclay is at a proportion of 0.01 to 50% by weight with respect to the total weight of said nanoclay.

11. The combination according to claim 10, wherein the cerium compound intercalated or supported in the nanoclay is at a proportion of 1 to 40% by weight with respect to the total weight of said nanoclay.

12. The combination according to any of the preceding claims, wherein the nanoclay also comprises compatibilizing or intercalating agents.

13. The combination according to claim 12, wherein the compatibilizing or intercalating agents are selected from the group consisting of polyvinyl alcohol, ethylene vinyl alcohol copolymer and derivatives from the same family, quaternary ammonium salts, organic phosphate salts and phosphonium salts.

14. The combination according to any of claims 12 or 13, wherein the proportion of compatibilizing or intercalating agents is between 0.01 and 50% by weight with respect to the total weight of the nanoclay containing them.

15. The combination according to claim 14, wherein the proportion of compatibilizing or intercalating agents is between 1 and 40% by weight with respect to the total weight of the nanoclay containing them.

16. The combination according to any of the preceding claims, wherein the hydrogen gas or the hydrogen donor agent and the nanoclay comprising the cerium compound form part of one and the same composition.

17. The combination according to claim 16, wherein the hydrogen gas or the hydrogen donor agent is at a proportion of 0.01 to 50% by weight with respect to the total weight of said composition.

18. The combination according to any of the preceding claims, further comprising a polimeric matrix.

19. The combination according to claim 18, which is in the form of a nanocomposite material.

20. The combination according to claim 18, wherein the hydrogen gas or the hydrogen donor agent and the nanoclay comprising at least one cerium compound are in different compositions or materials.

21. The combination according to claim 18, wherein the polimeric matrix and the nanoclay comprising the cerium compound form a nanocomposite material and the hydrogen gas or the hydrogen donor agent form part of another composition or material within the combination.

22. The combination according to any of claims 18 to 21, wherein the polimeric matrix is selected from the group consisting of thermoplastics, thermosetting materials or elastomers.

23. The combination according to claim 22, wherein thermoplastics, thermosetting materials or elastomers are selected from the group consisting of polyolefins, polyesters, polyamides, polyimides, polyketones, polyisocyanates, polysulfones, styrene plastics, phenolic resins, amide resins, ureic resins, melamine resins, polyester resins, epoxide resins, polycarbonates, polyvinylpyrrolidones, epoxy resins, polyacrylates, rubbers and gums, polyurethanes, silicones, aramids, polybutadiene, polyisoprenes, polyacrylonitriles, polyvinylidene fluoride, polyvinyl acetate, polyvinyl alcohol, ethylene vinyl alcohol copolymer, polyvinyl chloride and polyvinylidene chloride.

24. The combination according to claim 23, wherein the polimeric matrix is polyethylene terephthalate.

25. The combination according to any of claims 18 to 21, wherein the polimeric matrix is a biopolymer selected from the group consisting of proteins, polysaccharides, lipids and biopolyesters or any combination thereof.

26. The combination according to any of claims 18 to 25, wherein the matrix is at a proportion between 5 and 99.995% by weight with respect to the total weight of the combination.

27. The combination according to claim 26, wherein the polimeric matrix is at a proportion between 20 and 99.995% by weight with respect to the total weight of the combination.

28. The combination according to any of claims 18 to 27, wherein the nanoclay comprising the cerium compound is at a proportion between 0.0005 and 50% by weight with respect to the total weight of the combination.

29. The combination according to any of claims 18 to 28, wherein the hydrogen or the hydrogen donor agent is at a proportion from 0.5% to 50% by weight with respect to the total weight of the combination.

30. The combination according to any of the preceding claims, wherein the combination is in the form of a container.

31. The combination according to claim 30, wherein the hydrogen gas or the hydrogen donor agent, the polimeric matrix and the nanoclay comprising the cerium compound form part of one and the same composition or material within the container.

32. The combination according to claim 31, wherein the polimeric matrix and the nanoclay comprising the cerium compound form part of one and the same composition or material within the container and the hydrogen gas or the hydrogen donor agent form part of another composition or material within the container.

33. The combination according to any of claims 30 to 32, wherein the hydrogen gas or the hydrogen donor agent is at a proportion from 0.1% to 50% by weight with respect to the total weight of the container.

34. The combination according to any of claims 30 to 33, wherein the nanoclay comprising the cerium compound is at a proportion from 0.0005% to 50% by weight with respect to the total weight of the container.

35. The combination according to any of claims 30 to 34, wherein the container is a food container.

36. The combination according to any of claims 30 to 35, wherein the container is selected from films, sheets, bags, trays, bottles, bins or receptacles.

37. A process for obtaining the combination according to any of claims 1 to 36 comprising the addition of hydrogen gas or the hydrogen donor agent, either in free form or physically mixed with or intercalated or supported in a nanoclay, to the nanoclay comprising the cerium compound or a precursor thereof by means of chemical methods, physical methods or combinations of both.

38. The process according to claim 37, comprising the following steps:

a) reducing the size of natural clays by means of mechanical action until obtaining a particle size below 30 microns in the D90,

b) classifying the particles obtained in (a) with a size comprised between 0.1 and 100 microns,

c) obtaining thin layered structures in liquid suspension or in powder from the particles obtained in (b),

d) adding metallic cerium or cerium dioxide precursors which are selected from the group consisting of metal alkoxides or organic, inorganic or mixed salts of cerium metals,

e) forming cerium oxide or metallic cerium by means of physical treatments, chemical treatments or combinations of both, and

f) adding at least one hydrogen donor agent by means of physical methods, chemical methods or combinations of both.

39. The process according to claim 38, comprising at least one step (b') of removing organic matter or a step (b") of removing crystalline oxides and hard particles not subjected to modification.

40. The process according to any of claims 38 or 39, further comprising a step (c') of adding expanders.

41. The process according to claim 40, comprising a prior step of drying the clay with the expanders.

42. The process according to any of claims 38 to 41, further comprising a step of intercalating compatibilizing or intercalating agents in an aqueous base or with polar solvents or aqueous acid solutions, after any of steps (c), (c'), (e) or (f).

43. The process according to any of claims 37 to 42, which comprises adding the resulting composition to a polimeric matrix in a liquid state or dry state during any of the steps for processing said matrix.

44. Use of the combination according to any of claims 1 to 36 for manufacturing plastic items.

45. Use of the combination according to claim 44, wherein the plastic item is a food container.

FIG. 1

FIG. 2

FIG. 3

FIG. 4

FIG. 5

FIG. 6

**EP 2 859 942 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010209641 A
- US 7691290 B
- US 20100028499 A
- US 3290161 A
- US 3937632 A

- US 20090126573 A
- US 20110086757 A
- US 6610772 B
- ES 2012070391 W